# EUROPÄISCHE PATENTSCHRIFT

(11) **EP 2 326 479 B1**
(45) Veröffentlichungstag und Bekanntmachung des Hinweises auf die Patenterteilung: **14.11.2012**
(21) Anmeldenummer: 09778244.5
(22) Anmeldetag: 01.09.2009
(51) Int. Cl.: B29C 45/14, B60R 13/02

(54) **VERFAHREN UND VORRICHTUNG ZUR HERSTELLUNG EINES FORMTEILS MIT MEHREREN ANEINANDER GRENZENDEN, UNTERSCHIEDLICHEN DEKORBEREICHEN**
A METHOD AND A DEVICE FOR THE PRODUCTION OF A MOLDED PART HAVING A PLURALITY OF DIFFERENT DECORATIVE REGIONS THAT ABUT ON EACH OTHER
PROCÉDÉ ET DISPOSITIF PERMETTANT LA RÉALISATION D'UNE PIÈCE MOULÉE PRÉSENTANT PLUSIEURS ZONES DÉCORATIVES DIFFÉRENTES ADJACENTES

(30) Priorität: 08.09.2008 DE 102008046084
(43) Veröffentlichungstag der Anmeldung: 01.06.2011
(73) Patentinhaber: SMP Deutschland GmbH, 79268 Bötzingen (DE)
(72) Erfinder: BUCHET, Yann, F-67000 Strasbourg (FR)
(74) Vertreter: Patentanwälte Westphal, Mussgnug & Partner
(86) Internationale Anmeldenummer: PCT/EP2009/006318
(87) Internationale Veröffentlichungsnummer: WO 2010/025887

(56) Entgegenhaltungen:
- EP-A- 0 249 363
- EP-A- 0 582 075
- EP-A- 0 584 042
- EP-A- 1 120 220
- EP-A- 1 160 070
- EP-A- 2 070 680
- DE-A1- 10 039 332
- JP-A- 5 024 070
- JP-A- 7 195 433
- JP-A- 9 039 003
- JP-A- 61 230 920
- JP-A- 2004 249 487
- JP-A- 2005 280 227
- JP-A- 2008 030 300
- US-A1- 2005 093 203

## Beschreibung

Die vorliegende Erfindung betrifft ein Verfahren zur Herstellung eines Formteils a einander grenzenden, unterschiedlichen Dekorbereichen durch Hinterformen mehrerer in ein einen Formwerkzeugkern und eine Formwerkzeugmatrize umfassendes Formwerkzeug eingelegter, unterschiedlicher Dekorfolien.

Die vorliegende Erfindung betrifft auch ein Formwerkzeug zur Herstellung eines Formteils mit mehreren aneinander grenzenden, unterschiedlichen Dekorbereichen.

Es ist bekannt, bestimmte Bereiche von Formteilen für Innenverkleidungen von Kraftfahrzeugen mit Gewebematerialien, Kunststofffolien, Filz oder Teppichmaterialien, Leder oder auch Lederimitaten als Dekor zu veredeln. Dabei können den Dekorbereichen neben den besonderen optischen und haptischen Eigenschaften auch noch spezielle technische Funktionen zukommen. Üblicherweise werden zur Herstellung von Formteilen mit integrierten Dekorbereichen entsprechende Gewebe oder Dekorfolien in ein Formwerkzeug eingelegt und anschließend mit thermoplastischem Kunststoff hinterformt, wobei der Randbereich des Dekorelementes meist in einem separaten Arbeitsgang vor der endgültigen Fertigstellung des Formteils bearbeitet wird.

Um ein Formteil mit unterschiedlichen Oberflächenstrukturen oder Dekorbereichen zu versehen, werden häufig zwei oder mehrere separate Teile mit unterschiedlichen Oberflächenstrukturen in unterschiedlichen Werkzeugen als Halbzeug vorgefertigt und anschließend miteinander verbunden. Diese Vorgehensweise hat allerdings den Nachteil, dass mehrere Verarbeitungsschritte sowie Transportvorgänge durchgeführt und miteinander koordiniert werden müssen, was mit einem erheblichen Zeitaufwand und fertigungstechnischem Aufwand verbunden ist.

In der EP 1 655 122 A1 wird ein Verfahren zur Herstellung von Kunststoffformteilen beschrieben, bei dem in einem ersten Fertigungsschritt ein erstes Gewebe bzw. eine Dekorfolie in ein Formwerkzeug eingelegt und hinterspritzt wird und anschließend ein Teilstück aus dem so hergestellten Halbzeug ausgestanzt wird. In einem zweiten Schritt wird dann ein zweites Gewebe bzw. eine zweite Dekorfolie an Stelle des entfernten Teils des Halbzeugs eingelegt und das Halbzeug wird dann im Bereich des zweiten Gewebes bzw. der zweiten Folie ebenfalls hinterformt. Auch hier sind mehrere Arbeitsschritte erforderlich, um ein Formteil mit unterschiedlichen Dekorbereichen zu erhalten.

Bei nahezu allen bekannten und praktizierten Verfahren zur Herstellung von Formteilen für Kraftfahrzeuginnenverkleidungen mit unterschiedlichen Dekorbereichen ist es üblich, dass entweder während der Fertigung des Formteils oder spätestens nach seiner Fertigstellung ein Beschneiden des Randes des Dekorbereiches durchgeführt wird, um einen passgenauen und optisch einwandfreien Sitz des Dekorelementes im Formteil zu erreichen. Eine saubere und optisch makellose Gestaltung des Randbereichs eines Dekors ist allgemein ein großes Problem bei der Herstellung derartiger Formteile.

In der Offenlegungsschrift DE 10 2005 029 849 A1 wird ein Verfahren zur Herstellung eines Verbundelementes für eine Fahrzeugkarosserie beschrieben, wobei mindestens zwei flächige Teile einer Außenhaut nebeneinander in ein gemeinsames Werkzeug eingelegt und in dem Werkzeug über ihre gesamte Fläche mit einer gemeinsamen Trägerstruktur versehen werden. Bei dem Verfahren ist vorgesehen, Teile der Außenhaut als separate Teile in das Werkzeug einzulegen, wobei benachbarte Teile der Außenhaut am Rand dichtend überlappen. Der Nachteil dieses Verfahrens besteht darin, dass der Übergangsbereich zwischen den einzelnen unterschiedlichen Flächen eine starke optische Abgrenzung zwischen den Flächen hervorruft, so dass dieses Verfahren lediglich für die Herstellung von Karosserieelementen im Außenbereich geeignet ist, wo derartige Übergänge entweder gewollt sind, oder durch entsprechende Maßnahmen, wie z.B. das Anbringen einer Leiste, kaschiert werden können. Für die Herstellung von Formteilen mit unterschiedlichen Dekorbereichen für die Innenverkleidung von Kraftfahrzeugen, insbesondere Instrumententafeln, Seitenverkleidungen oder Türverkleidungen, ist das in dem Dokument beschriebene Verfahren nicht geeignet.

In der DE 103 20 210 A1 werden Innenverkleidungsteile mit Dekorelementen beschrieben, bei denen der Randbereich des Dekorelementes umlaufend durch einen Dekoraussparungsrand bedeckt wird, wobei eine flächige Anlageverbindung zwischen Dekorelement, Randbereich und Dekoraussparungsrand realisiert wird. Hier hat man die Problematik eines unregelmäßigen Fugenbildes entlang des Randbereiches des Dekorelementes zwar ohne zusätzliches Beschneiden der Dekorfolien gelöst, jedoch kann ein exakter Fugen- bzw. Kantenverlauf zwischen dem Dekorelement und Verkleidungsteil nur dadurch erreicht werden, dass eine Vielzahl unterschiedlicher Bauteile miteinander verklebt bzw. kombiniert werden, was entsprechend aufwändig ist.

In der EP 1 160 070 A2 wird ein Verfahren und eine Vorrichtung zur Herstellung eines Formteiles mit mehreren aneinandergrenzenden, unterschiedlichen Dekorbereichen beschrieben, bei dem mindestens eine Dekorfolie mit Hilfe eines Greifers in die Kavität eines geöffneten, eine Matrize und einen Kern umfassenden Formwerkzeuges eingelegt wird und mit Hilfe von im Kern integrierten Schiebern fixiert wird. Anschließend wird die Dekorfolie bei gleichzeitigem Zurückfahren des Schiebers kernseitig mit einem thermoplastischen Kunststoff hinterformt. Da die mindestens eine Dekorfolie durch den Greifer lediglich im Formwerkzeug abgelegt wird, anschließend der Greifer aus dem Formwerkzeug entfernt wird und erst dann die lose eingelegte Dekorfolie im Formwerkzeug zwischen Kernschieber und Matrizensteg fixiert wird, besteht die Gefahr, dass es zu einem Verschieben der mindestens einen Dekorfolie kommt, wodurch das optische Erscheinungsbild des Dekorbereiches negativ beeinflusst werden kann.

Aufgabe der vorliegenden Erfindung ist es, ein Verfahren und eine Vorrichtung zur Herstellung von Formteilen mit mehreren aneinandergrenzenden, unterschiedlichen Dekorbereichen für Innenverkleidungen von Kraftfahrzeugen anzubieten, mit dessen Hilfe es gelingt, die Dekorbereiche so in das Formteil einzufügen, dass ein sauberer, fugengenauer und optisch einwandfreier Übergang zwischen den einzelnen Dekorbereichen mit einem definierten Spalt zwischen ihrem Übergang auf dem Endprodukt gegeben ist.

Gelöst wird diese Aufgabe durch ein Verfahren mit den Merkmalen des Anspruchs 1 und eine Vorrichtung mit den Merkmalen des Anspruchs 7. Bevorzugte Ausführungsformen des erfindungsgemäßen Verfahrens und der erfindungsgemäßen Vorrichtung sind in den jeweiligen Unteransprüchen wiedergegeben.

Mit Hilfe eines Formwerkzeugs, das im Wesentlichen aus einem Formwerkzeugkern und einer Formwerkzeugmatrize besteht, gelingt es, Kunststoffformteile mit unterschiedlichen Dekorbereichen herzustellen, wobei ein Nacharbeiten oder zusätzliches Überdecken des Randbereiches der Dekorelemente nicht mehr erforderlich ist. Dieses Formwerkzeug ist mit einem Greifer kombiniert und die unterschiedlichen Dekorfolien werden auf diesem Greifer, der über einen beweglichen Greiferrahmen sowie eine Greiferplatte verfügt, angeordnet. Dabei sind die Dekorfolien mit ihrem Rand im Bereich des Greiferrahmens angeordnet und überlappen miteinander in ihrem Randbereich. Mit Hilfe des Greifers werden die Dekorfolien nun in die Kavität eines Formwerkzeugs eingelegt, wobei die einander überlappenden Dekorränder mit Hilfe des Greiferrahmens, in Nuten eingepresst werden, die korrespondierend zu dem Greiferrahmen im Formwerkzeugkern vorgesehen sind. Die Dekorfolien werden auf diese Weise auf der Oberfläche des Formwerkzeugkerns fixiert.

Um die Dekorfolien auch beim Herausfahren des Greifers aus dem Werkzeug auf der Oberfläche des Formwerkzeugs zu halten, werden im Formwerkzeugkern integrierte, im Bereich der Nuten angeordnete Schieber aktiviert, die ihrerseits in die Nuten eingreifen und den Greiferrahmen aus den Nuten schieben, wobei sie gleichzeitig die Dekorfolien fixieren. Nachdem der Greifer aus dem Werkzeugbereich entfernt ist, kann das Formwerkzeug mit Hilfe einer Formwerkzeugmatrize geschlossen werden, wobei die Formwerkzeugmatrize erfindungsgemäß zu den in dem Formwerkzeugkern integrierten Schiebern korrespondierende Stege aufweist, die im geschlossenen Formwerkzeug nun die unterschiedlichen Dekorbereiche mit den unterschiedlichen Dekorfolien voneinander trennt. Beim kernseitigen Hinterformen der Dekorfolien werden diese jeweils gegen die Matrizenoberfläche bzw. mit ihrem Randbereich gegen die oben genannten Stege gedrückt.

Nach dem Öffnen des Formwerkzeuges liegt somit ein Formteil mit zwei benachbarten, unterschiedlichen Dekorbereichen vor, die durch eine schmale, im Träger des Formteils angeordnete Nut voneinander getrennt sind, in die die Ränder der jeweils den Dekorbereich bedeckenden Dekorfolien eingeführt sind. Die auf der Matrize angeordneten Stege sind vorzugsweise so dimensioniert, dass die sich daraus ergebenden Nuten im Träger äußerst schmal sind und die Ränder der Dekorbereiche sauber voneinander getrennt sind, ohne dass der optische Eindruck darunter leidet. Bei einer vorteilhaften Ausgestaltung der vorliegenden Erfindung ist die die beiden Dekorbereiche trennende Nut so schmal gehalten, dass die Ränder der jeweiligen Dekorbereiche fast unmittelbar aneinander angrenzen.

Als Dekorfolien können Gewebe, Dekorstoffe, Kunststofffolien, Teppichstoffe, Leder und/oder Lederimitate eingesetzt werden. Zum Hinterformen der Dekorfolien werden üblicherweise thermoplastische Kunststoffe eingesetzt, wobei als geeignete Kunststoffe Polypropylen (PP), Polyethylen (PE), Polyurethan (PU), Acrylnitril-Butadien-Styrol (ABS), Acrylnitril-Butadien-Styrol/Polycarbonat Copolymerisat (ABS-PC) oder Polyamid (PA) eingesetzt werden.

Eine vorteilhafte Ausgestaltung der vorliegenden Erfindung sieht vor, dass mehrere bewegliche Schieber als Greiferrahmen eingesetzt werden, die dann je nach Bedarf die Folien einzeln greifen und in die entsprechenden Nuten im Formwerkzeugkern einführen.

Eine weitere vorteilhafte Ausgestaltung der vorliegenden Erfindung sieht vor, dass der Greifer eine aus der Greiferebene hervorstehende, auf Federn gelagerte Greiferplatte aufweist, mit deren Hilfe die Dekorfolien auf die Oberfläche des Formwerkzeugkerns gedrückt und darauf fixiert werden.

Die vorliegende Erfindung betrifft auch eine Vorrichtung zur Herstellung von Formteilen mit mehreren aneinander grenzenden, unterschiedlichen Dekorbereichen, wobei die Vorrichtung ein Formwerkzeug mit einem Formwerkzeugkern und einer Formwerkzeugmatrize sowie einen Greifer mit einer Greiferplatte und einem beweglichen Greiferrahmen zum Einlegen unterschiedlicher, einander in ihrem Randbereich überlappender Dekorfolien in das Formwerkzeug umfasst. Dabei dient der Greiferrahmen zum Einführen der Dekorränder in dafür im Formwerkzeugkern vorgesehene Nuten, die wiederum mit ebenfalls im Formwerkzeugkern integrierten Schiebern kombiniert sind, mit deren Hilfe der Greiferrahmen später kernseitig aus den Nuten herausgedrückt werden kann. Dabei fixieren die Schieber ihrerseits die Dekorfolien auf der Formwerkzeugoberfläche. Zur Vorrichtung gehört weiterhin eine Formwerkzeugmatrize, die zu den im Formwerkzeugkern integrierten Schiebern korrespondierende Stege aufweist, die beim Hinterformen des Formteils die unterschiedlichen Dekorbereiche voneinander trennen.

Vorteilhafte Ausgestaltungen der erfindungsgemäßen Vorrichtung sehen vor, dass als Greiferrahmen mehrere unabhängig voneinander bewegliche Schieber vorgesehen sind und/oder dass als Greiferplatte eine aus der Greiferebene hervorstehende auf Federn gelagerte Greiferplatte vorgesehen ist.

Im Folgenden wird die vorliegende Erfindung anhand von Zeichnungen ausführlich erläutert. Dabei zeigen die
- Fig. 1 bis 5: im Querschnitt, jeweils einen Ausschnitt aus einem Formwerkzeugkern sowie einem korrespondierenden Greifer vor, während und nach dem Einlegen der unterschiedlichen Dekorfolien in das Formwerkzeug,
- Fig. 6: im Querschnitt, einen Ausschnitt des geschlossenen Formwerkzeugs vor dem Hinterformen der Dekorfolien,
- Fig. 7 bis 9: im Querschnitt, ausschnittsweise einzelne Schritte des Hinterformens,
- Fig. 10: im Querschnitt, einen Ausschnitt aus dem fertigen Formteil
- Fig. 11a bis 11c: im Querschnitt, unterschiedliche Ausgestaltungen des Formwerkzeugkerns,
- Fig. 12a bis 12d: im Querschnitt, unterschiedliche Ausgestaltungen des Greifers und die
- Fig. 13 bis 19: ebenfalls im Querschnitt, ausschnittsweise Greifer, Formwerkzeug und Matrize im Verfahrensablauf beim Einsatz eines Greifers mit einem verschiebbaren Doppelgreiferrahmen.

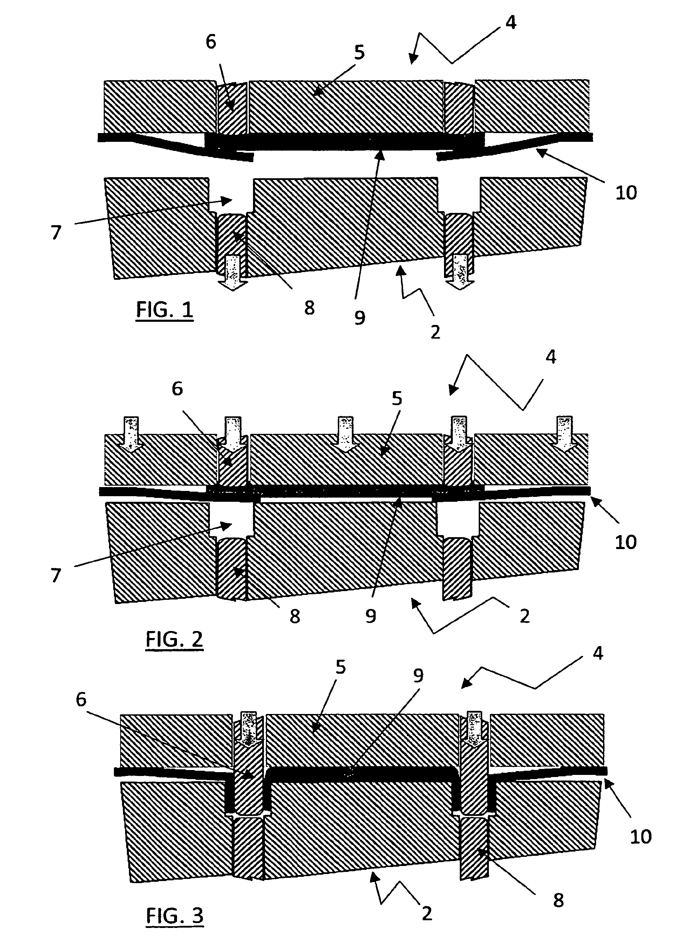

In den Figuren 1 bis 5 ist in einer Querschnittdarstellung von Ausschnitten des Formwerkzeugkerns 2 und des Greifers 4 der allgemeine Ablauf des erfindungsgemäßen Verfahrens bis zum abgeschlossenen Einlegen der unterschiedlichen Dekorfolien wiedergegeben. So ist in der Figur 1 ein Ausschnitt aus dem Greifer 4 dargestellt, auf dem unterschiedliche Dekorfolien 9 und 10 angeordnet sind, deren Ränder im Bereich des Greiferrahmens 6 einander überlappen. Bei dieser Darstellung handelt es sich um eine Momentaufnahme kurz vor dem Einlegen der Dekorfolien 9, 10 in das Formwerkzeug, von dem ausschnittsweise der Formwerkzeugkern 2 mit darin angeordneten Nuten 7, die korrespondierend zum Greiferrahmen 6 angeordnet sind, dargestellt ist. Im Formwerkzeugkern 2 sind im Bereich der Nuten 7 jeweils Schieber 8 integriert, die mit dem Greiferrahmen 6 bzw. den Nuten 7 korrespondieren.

Die Figur 2 zeigt in der gleichen Darstellungsweise den nächsten Verfahrensschritt, bei dem die Dekorfolien 9 und 10 mit Hilfe des Greifers 4 oberflächlich auf den Formwerkzeugkern 2 aufgebracht sind. Der Greiferrahmen 6 befindet sich noch in der Ausgangsposition und die Ränder der Dekorfolien 9 und 10 liegen überlappend oberhalb der Nuten 7 auf dem Formwerkzeugkern 2.

Die Figur 3 gibt den nächsten Verfahrensschritt wieder, bei dem die Ränder der Dekorfolien 9 und 10 mit Hilfe des Greiferrahmens 6 in die im Formwerkzeugkern 2 angeordneten Nuten 7 eingeführt werden. Gleichzeitig ist dabei die Dekorfolie 9 mit Hilfe der Greiferplatte 5 auf der Oberfläche des Formwerkzeugkerns 2 fixiert. Durch das Einschieben der Dekorfolienränder in die Nut 7 ist die Überlappung der Dekorfolien 9, 10 aufgehoben und die Ränder der Dekorfolien 9, 10 belegen jeweils die Seitenwände der Nut 7.

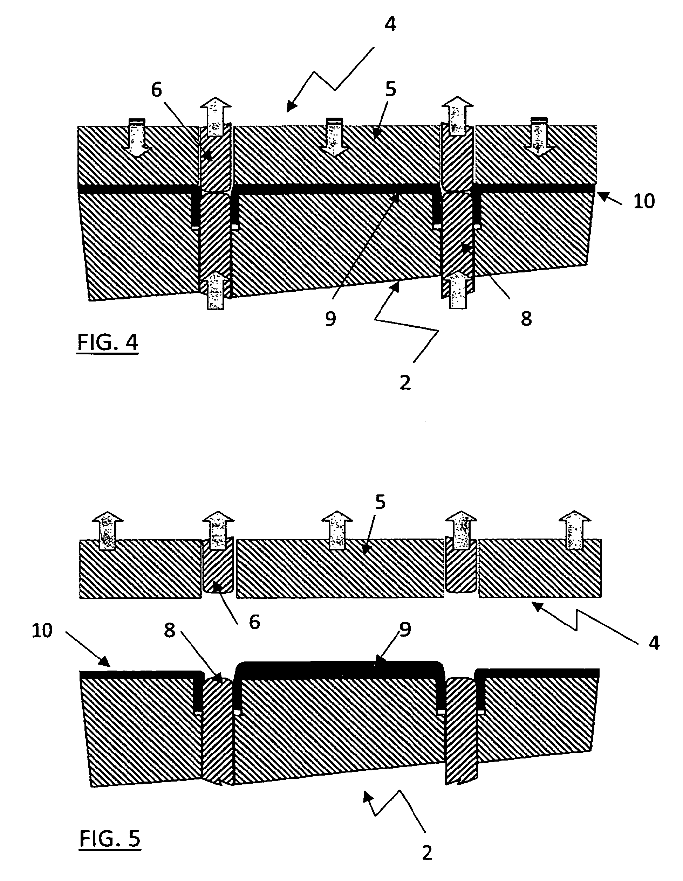

Der Folgeschritt ist in der Figur 4 zu sehen, wobei die Dekorfolien 9, 10 mit Hilfe des Greifers 4 auf der Oberfläche des Formwerkzeugkerns 2 fixiert sind und der Greiferrahmen 6 mit Hilfe der im Formwerkzeugkern 2 integrierten Schieber 8 aus der Nut herausgeschoben wird, während gleichzeitig die Folien 9, 10 mit Hilfe des Schiebers 8 in der Nut fixiert werden.

In der Figur 5 ist der Vorgang des Einlegens beendet und der Greifer 4 fährt mitsamt Greiferplatte 5 und Greiferrahmen 6 aus dem Formwerkzeug, während auf der Oberfläche des Formwerkzeugkerns 2 die unterschiedlichen Dekorfolien 9 und 10 durch den Schieber 8 fixiert und getrennt voneinander angeordnet sind.

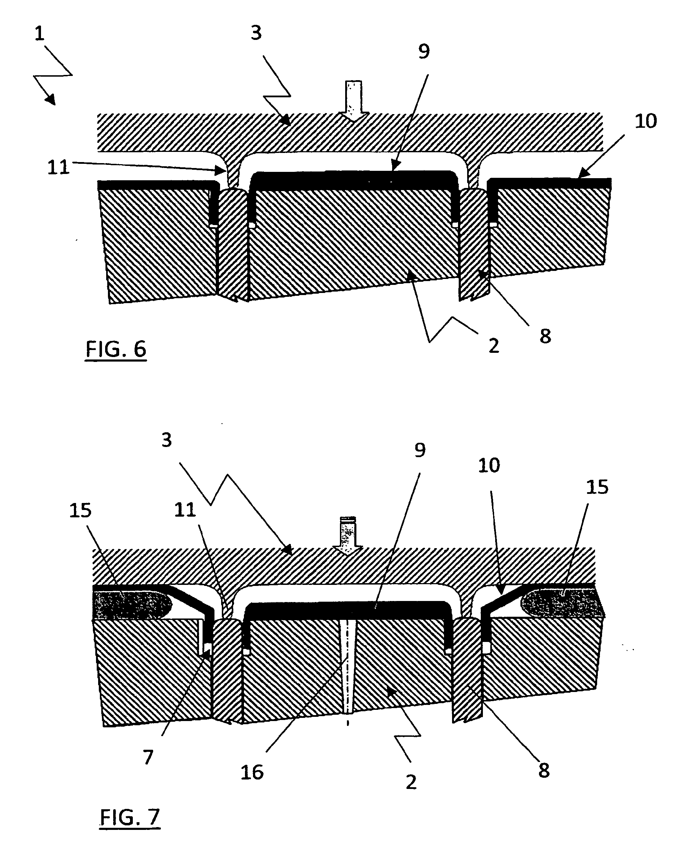

Die Figur 6 zeigt das geschlossene Formwerkzeug 1, bei dem nun die Formwerkzeugmatrize 3 das Formwerkzeug 1 schließt, wobei die zu den Schiebern 8 korrespondierenden Stege 11 mit den Stegen 8 einen Verbindungschluss bilden und damit das Formwerkzeug in Einzelkavitäten unterteilen.

Die einzelnen Schritte des Hinterformens sind in den Figuren 7 bis 9 zu sehen. Dazu ist in der Figur 7 zunächst im Formwerkzeugkern 2 auch der Einspritzkanal 16 dargestellt, der immer im Formwerkzeugkern vorhanden ist, auf dessen Darstellung jedoch in den meisten Figuren aus Gründen der Vereinfachung der Darstellung verzichtet wird. Die Figur 7 zeigt den Verfahrensmoment des Hinterformens der äußeren Dekorfolien 10 mit dem thermoplastischen Kunststoff 15. Während die Dekorfolie 10 mit ihrem Rand noch in der Nut 7 eingeklemmt ist, ist die entsprechende Kavität des Werkzeugs bereits teilweise mit thermoplastischem Kunststoff 15 gefüllt, wobei die Dekorfolie 10 mit der Dekoroberfläche gegen die Matrize 3 gedrückt wird. Die Kavitäten für die einzelnen unterschiedlichen Dekorbereiche sind durch die noch bestehende Verbindung zwischen Schieber 8 und Steg 11 voneinander getrennt.

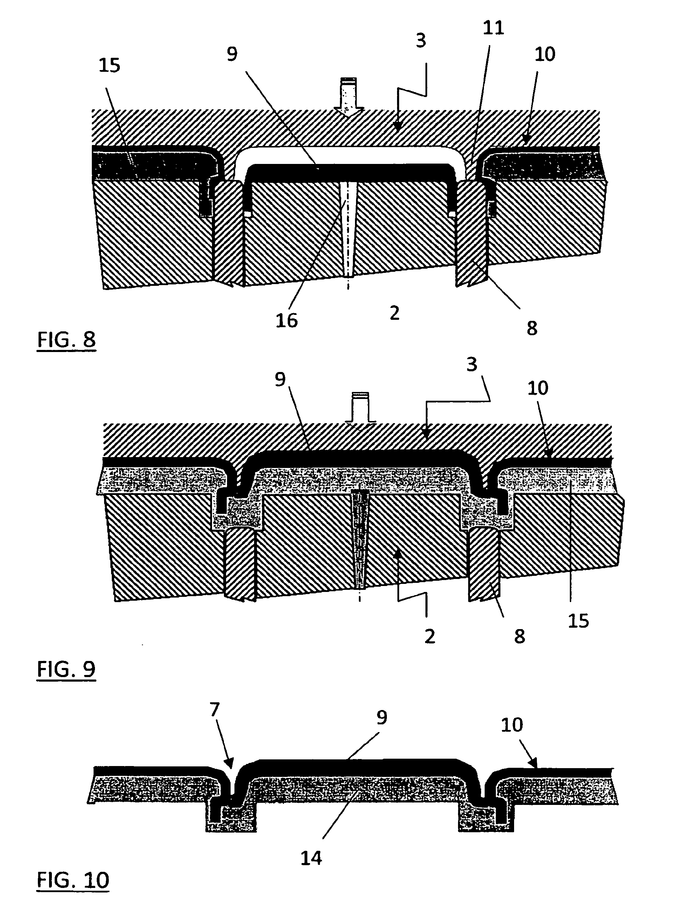

In der Figur 8 ist die Dekorfolie 10 vollständig hinterformt und liegt nun auch mit ihrem Rand am Steg 11 an, während die Kavitäten für die einzelnen Dekorbereiche weiterhin voneinander getrennt sind und das Hinterformen der mittleren Dekorfolie 9 noch nicht begonnen hat.

Die Figur 9 zeigt das geschlossene Formwerkzeug mit vollständig hinterformten Formteil. Dazu haben die Schieber 8 wieder ihre Ausgangsstellung eingenommen und die Kavitäten für die einzelnen Dekorbereiche sind miteinander verbunden und vollständig mit thermoplastischem Kunststoff gefüllt.

Ein Querschnitt des fertigen Produkts (Formteil) ist als Ausschnitt in der Figur 10 dargestellt, wobei der Träger 14 mit zwei unterschiedlichen Dekorfolien 9, 10 bedeckt ist, die jeweils mit ihren Rändern in eine Nut 7 eingeführt sind. Bei dieser Darstellung ist zu berücksichtigen, dass es sich um Zeichnungen handelt, die das Verfahrensprinzip erläutern sollen, und die später im Formteil tatsächlich auftretende Nut 7 vorzugsweise äußerst schmal ist, so dass die einzelnen Dekorbereiche unmittelbar aneinander angrenzen und somit ein optisch einwandfreier Eindruck gewährleistet ist, wobei die Ränder der Dekorbereiche sauber voneinander getrennt sind.

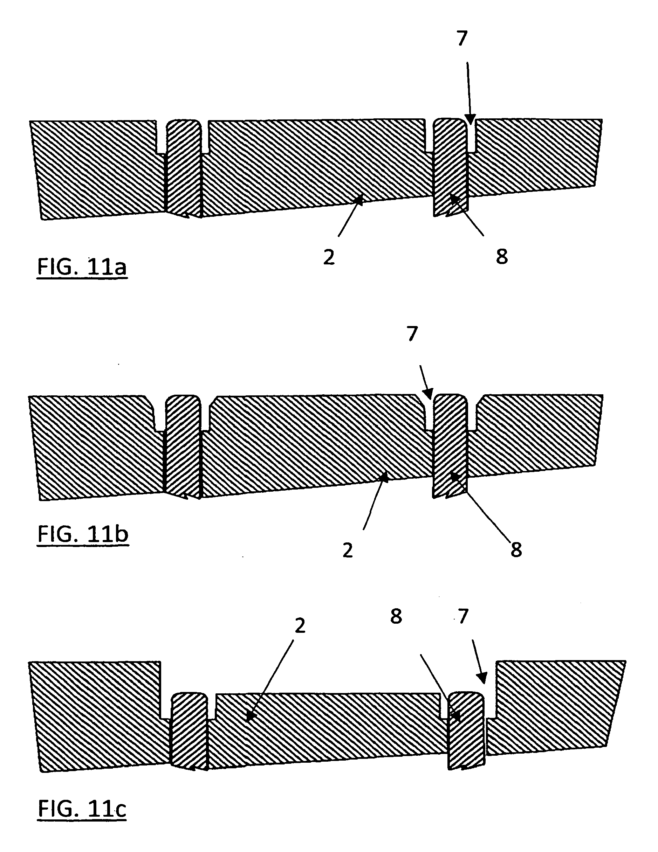

In den Figuren 11a bis 11c sind ebenfalls im Querschnitt unterschiedliche Ausgestaltungen des Formwerkzeugkerns 2 wiedergegeben. So ist in der Figur 11b eine Nut 7 mit abgeschrägter Kante zu erkennen, mit deren Hilfe das Einführen der Dekorfolien in die Nut 7 erleichtert wird. In der Figur 11c ist eine Ausgestaltung des Formwerkzeugkerns 2 zu sehen, die für die Herstellung von Formteilen konzipiert ist, deren unterschiedliche Dekorbereiche zusätzlich auf unterschiedlichen Ebenen des Formteiles angeordnet sind.

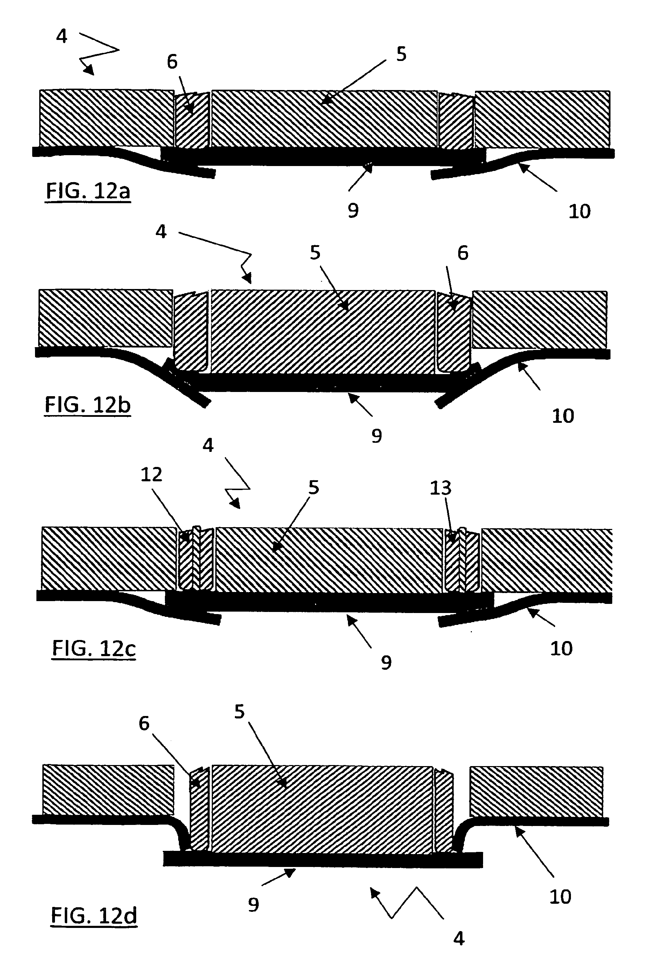

Die Figuren 12a bis 12d zeigen ebenfalls im Querschnitt einige Ausschnitte unterschiedlicher Ausgestaltungen des Greifers 4.

Dabei zeigt die Figur 12a die einfachste Ausführungsvariante, bei der der Greifer 4 mit Greiferplatte 5 eine Ebene aufweist und der Greiferrahmen 6 einteilig ausgeführt ist.

Die Figur 12b zeigt eine Variante, bei der die Greiferplatte 5 federnd im Greifer 4 gelagert ist und mitsamt dem Greiferrahmen 6 aus der Greiferebene hervorsteht. Der Vorteil dieser Variante besteht darin, dass beim Einlegen der Dekorfolien 9, 10 die Dekorfolie 9 auf Grund der Federkraft fest auf die Formwerkzeugkernoberfläche gepresst wird und somit ein Verschieben der Folie beim Einlegen in das Formteil verhindert wird. Die Feder selber ist bei der Abbildung nicht dargestellt.

In der Figur 12c ist ein eben angeordneter Greifer 4 zu erkennen, der einen zweiteiligen Greiferrahmen aufweist, wobei der Greiferrahmen sich aus einem inneren Schieber 13 und einem äußeren Schieber 12 zusammensetzt.

In der Figur 12d ist eine weitere Ausgestaltung des Greifers 4 dargestellt, bei der die Greiferplatte 5 gefedert aus der Ebene des Greifers herausragt und für die Einführung der unterschiedlichen Dekorfolien 9, 10 in die entsprechenden Nuten im Formwerkzeugkern ein Greiferrahmen 6 vorgesehen ist, der nur noch formschlüssig zur Greiferplatte 5 angeordnet ist, während er zum Greifer 4 hin eine Lücke aufweist, was eine besondere Art der Überlappung der unterschiedlichen Dekorfolien 9 und 10 ermöglicht. Je nach Beschaffenheit der einzelnen Dekorfolien kann diese Greifervariante Vorteile mit sich bringen. Auch hier ist die Feder selbst nicht dargestellt.

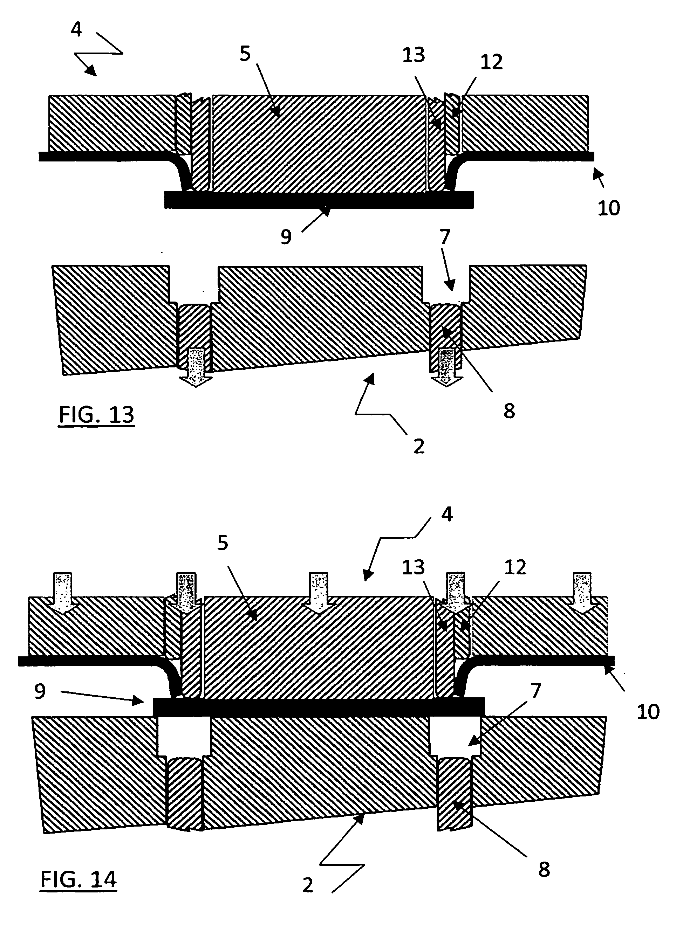

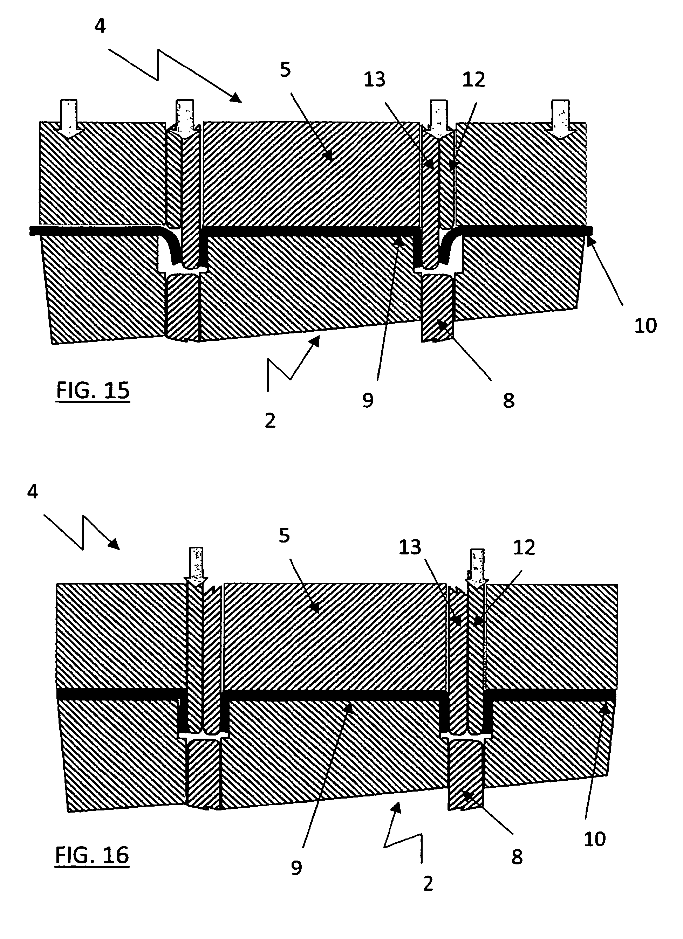

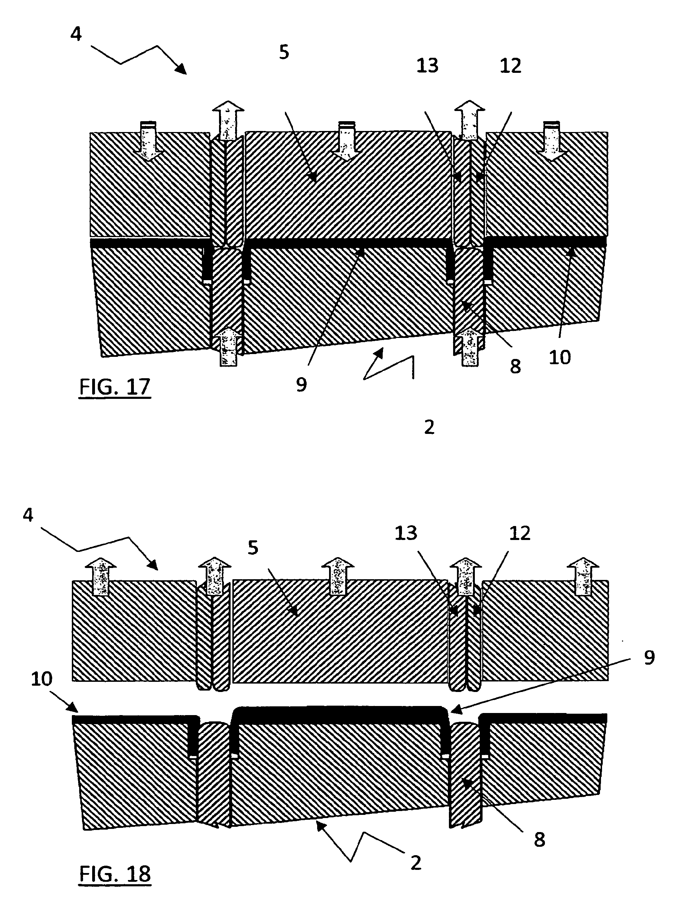

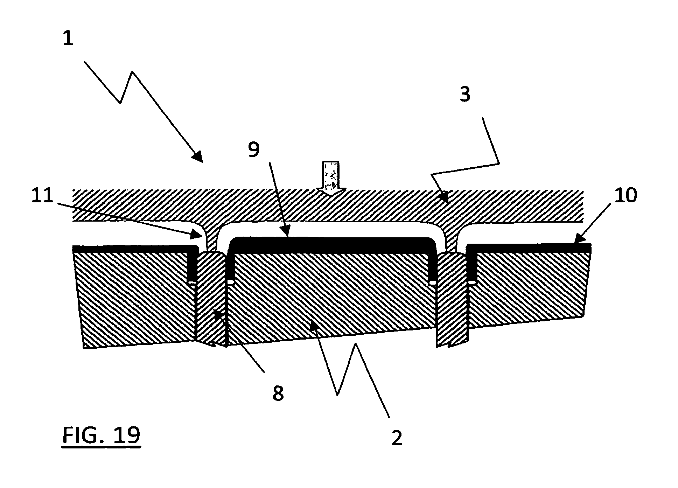

In den Figuren 13 bis 19 ist jeweils im Querschnitt in Analogie zu dem in den Figuren 1 bis 6 dargestellten Verfahrensablauf ein Verfahrensablauf mit einem zweiteilig ausgeführten Greiferrahmen dargestellt, wobei der Greiferrahmen einen inneren Schieber 13 und einen äußeren Schieber 12 aufweist, die sukzessiv von innen nach außen zum Einführen der jeweiligen Dekorfolien 9, 10 in die Nuten 7 eingesetzt werden. Da die sonstigen Verfahrensschritte dem bereits durch die Figuren 1 bis 6 erläuterten Verfahren entsprechen, wird auf eine detaillierte Beschreibung der Figuren 13 bis 19 verzichtet.

Die obigen Ausführungen sowie die entsprechenden Abbildungen, bei denen es vor allem darum geht, das Verfahrensprinzip zu erläutern, konzentrieren sich im Wesentlichen auf zwei unterschiedliche Dekorbereiche. Es versteht sich von selbst, dass das Prinzip für beliebig viele unterschiedliche Dekorbereiche anwendbar ist. Unter dem Begriff Dekorbereich sind dabei nicht nur die mit einer Dekorfolie belegten Bereiche zu verstehen, sondern auch sonstige sichtbare Bereiche des Formteils, deren Oberfläche als Dekor auch direkt auf dem Träger des Formteils ausgebildet ist, so dass das Erfindungsprinzip bereits beim Einsatz einer einzigen Dekorfolie umgesetzt werden kann, wenn beispielsweise in Bezug auf die oben beschriebenen Figuren lediglich die mittlere Dekorfolie 9 mit dem Greifer 4 in das Werkzeug eingelegt wird und anschließend die Kavitäten in Analogie zu den Figuren 7 bis 9 hinterformt werden, wobei dann die äußeren Kavitäten direkt mit dem thermoplastischen Kunststoff 15 gefüllt werden und in diesen Bereichen die Dekoroberfläche als Negativ der Matrizenoberfläche ausgebildet wird. Unter dem Begriff Dekorfolie sind erfindungsgemäß auch bereits weitgehend vorgeformte Dekorelemente zu verstehen, die mittels Greifer 4 in das Werkzeug eingelegt werden.

### Bezugszeichenliste

- 1: Formwerkzeug
- 2: Formwerkzeugkern
- 3: Formwerkzeugmatrize
- 4: Greifer
- 5: Greiferplatte
- 6: Greiferrahmen (Schieber)
- 7: Nut
- 8: Schieber
- 9: Dekorfolie
- 10: Dekorfolie
- 11: Steg
- 12: Äußerer Schieber
- 13: Innerer Schieber
- 14: Träger
- 15: Thermoplastischer Kunststoff
- 16: Einspritzkanal

## Patentansprüche

1. Verfahren zur Herstellung eines Formteils mit mehreren aneinander grenzenden, unterschiedlichen Dekorbereichen mit Hilfe eines eine Matrize (3) und einen Kern (2) umfassenden Formwerkzeugs (1) durch Hinterformen mindestens einer, einen Teilbereich des Formteils abdeckenden, in das Formwerkzeug eingelegten Dekorfolie (9, 10) mit einem thermoplastischen Kunststoff,
**dadurch gekennzeichnet, dass**
a) die mindestens eine Dekorfolie (9, 10) auf einem eine Greiferplatte (5) und einen beweglichen Greiferrahmen (6) umfassenden Greifer (4) angeordnet ist;
b) die mindestens eine Dekorfolie (9, 10) mit Hilfe des Greifers (4) in die Kavität des geöffneten Formwerkzeugs (1) eingelegt wird;
c) der Dekorrand mit Hilfe des Greiferrahmens (6) in im Formwerkzeugkern (2) angeordnete Nuten (7) eingeführt wird;
d) die mindestens eine Dekorfolie (9, 10) mit Hilfe von im Kern (2) integrierten, in die Nuten (7) eingreifenden Schiebern (8) fixiert werden, wobei die Schieber (8) gegen den in die Nuten (7) eingreifenden Greiferrahmen (6) fahren und diesen aus den Nuten (7) drücken, während gleichzeitig der Greifer (4) die mindestens eine Dekorfolie (9, 10) gegen den Formwerkzeugkern (2) presst und die Schieber (8) ihrerseits die mindestens eine Dekorfolie (9, 10) in der Nuten (7) einklemmt und festhält;
e) der Greifer (4) aus der Kavität des Werkzeugs herausgefahren wird;
f) das Formwerkzeug (1) mit der zu den Nuten (7) bzw. den in dem Formwerkzeugkern (2) integrierten Schiebern (8) korrespondierende Stege (11) aufweisenden Matrize (3) geschlossen wird; und
g) die mindestens eine Dekorfolie (9, 10) anschließend bei gleichzeitigem Zurückfahren der Schieber (4) kernseitig mit einem thermoplastischen Kunststoff (15) hinterformt wird, wobei die Dekorfolie (9, 10) von dem thermoplastischen Kunststoff (15) gegen die Matrizenoberfläche gedrückt wird und die unterschiedlichen Dekorbereiche durch die mit den in dem Formwerkzeugkern (2) integrierten Schiebern (8) korrespondierenden Stegen (11) getrennt werden.

2. Verfahren nach Anspruch 1,
**dadurch gekennzeichnet, dass**
mehrere unterschiedliche in das Formwerkzeug eingelegte Dekorfolien (9, 10) eingesetzt werden, wobei die Dekorfolien einander in ihrem Randbereich überlappend auf dem Greifer (4) angeordnet sind und die überlappenden Dekorränder mit Hilfe des Greiferrahmens (6) in im Formwerkzeug angeordnete Nuten (7) eingeführt werden.

3. Verfahren nach Anspruch 1 oder 2,
**dadurch gekennzeichnet, dass**
als Dekorfolien (9, 10) Gewebe, Dekorstoffe, Kunststofffolien, Teppichstoffe, Leder und/oder Lederimitate eingesetzt werden.

4. Verfahren nach einem der Ansprüche 1 bis 3,
**dadurch gekennzeichnet, dass**
als thermoplastischer Kunststoff (15) Polypropylen (PP), Polyethylen (PE), Polyurethan (PU), Acrylnitril-Butadien-Styrol (ABS), Acrylnitril-Butadien-Styrol / Polycarbonat Copolymerisat (ABS-PC) oder Polyamid (PA) eingesetzt wird.

5. Verfahren nach einem der Ansprüche 1 bis 4,
**dadurch gekennzeichnet, dass**
als Greiferrahmen (6) mehrere bewegliche Schieber (12, 13) eingesetzt werden.

6. Verfahren nach einem der Ansprüche 1 bis 5,
**dadurch gekennzeichnet, dass**
eine in Richtung Formwerkzeugkern (2) aus dem Greifer (4) hervorstehende, gefederte Greiferplatte (5) eingesetzt wird.

7. Vorrichtung zur Herstellung von Formteilen mit mehreren aneinander grenzenden, unterschiedlichen Dekorbereichen, mit
a) einem Formwerkzeug (1) mit einem Formwerkzeugkern (2) und einer Formwerkzeugmatrize (3) und
b) einem Greifer (4) mit einer Greiferplatte (5) und einem beweglichen Greiferrahmen (6) zum Einlegen mindestens einer Dekorfolie (9, 10) in das Formwerkzeug,
wobei
i) der Greiferrahmen (6) zum Einführen der Dekorränder in im Formwerkzeugkern (2) dafür vorgesehene Nuten (7) einschiebbar ist,
ii) die Nuten (7) mit im Formwerkzeugkern (2) integrierten Schiebern (8) kombiniert sind, wobei die Schieber (8) kernseitig zum Herausdrücken des Greiferrahmens (6) und Fixieren der Dekorränder in die Nuten (7) einschiebbar sind, und
iii) die Matrize (3) zu den im Formwerkzeugkern (2) integrierten Schiebern (8) korrespondierende, zum Trennen der unterschiedlichen Dekorbereiche vorgesehene Stege (11) aufweist.

8. Vorrichtung nach Anspruch 7,
**dadurch gekennzeichnet, dass**
als Greiferrahmen (6) mehrere unabhängig voneinander bewegliche Schieber (12, 13) vorgesehen sind.

9. Vorrichtung nach Anspruch 7 oder 8,
**dadurch gekennzeichnet, dass**
eine aus dem Greifer (4) hervorstehende, gefederte Greiferplatte (5) vorgesehen ist.

## Claims

1. A method for the production of a moulded part with several adjacent, different decorative zones, by means of a moulding tool (1) comprising a mould (3) and a core (2), by back-moulding at least one decorative foil (9, 10), placed in the moulding tool and covering a partial region of the moulded part, with a thermoplastic material,
**characterised in that**
a) the at least one decorative foil (9, 10) is disposed on a gripper (4) consisting of a gripper plate (5) and a movable gripper frame (6);
b) the at least one decorative foil (9, 10) is placed in the cavity of the opened moulding tool (1) by means of the gripper (4);
c) the decorative margin is inserted by means of the gripper frame (6) into grooves (7) disposed in the moulding tool core (2);
d) the at least one decorative foil (9, 10) is fixed by means of sliders integrated in the core (2) which engage in the grooves (7), wherein the sliders (8) move against the gripper frame (8), which engages in the grooves (7), and press the latter out of the groove (7), while at the same time the gripper (4) presses the at least one decorative foil (9, 10) against the moulding tool core (2) and the sliders (8), for their part, clamp and retain in position at least one decorative foil (9, 10) in the grooves (7);
e) the gripper (4) is moved out of the cavity of the tool;
f) the moulding tool (1) with the mould (3) displacing ridges (11) corresponding to the grooves (7) and, respectively, the sliders (8) integrated in the moulding tool core (2), is closed; and
g) the at least one decorative foil (9, 10) is subsequently back-moulded on the core side with a thermoplastic material (15) at the same time as the slider (4) is moved back, wherein the decorative foil (9, 10) is pressed against the mould surface by the thermoplastic material (15) and the different decorative zones are separated by the ridges (11) corresponding to the sliders (8) integrated in the moulding tool core (2).

2. Method according to Claim 1,
**characterised in that**
several different decorative foils (9, 10) placed in the moulding tool are used, wherein the decorative foils are arranged on the gripper (4) with their margin areas overlapping, and the overlapping decorative margins are inserted by means of the gripper frame (6) in grooves (7) disposed in the moulding tool.

3. Method according to Claim 1 or 2,
**characterised in that**
fabrics, decorative materials, plastic foils, carpet materials, leather and/or imitation leather may be used as decorative foils (9, 10).

4. Method according to one of Claims 1 to 3,
**characterised in that**
polypropylene (PP), polyethylene (PE), polyurethane (PU), acrylonitrile butadiene styrene (ABS), acrylonitrile butadiene styrene/polycarbonate copolymer (ABS-PC) or polyamide (PA) is used as thermoplastic material (15).

5. Method according to one of Claims 1 to 4,
**characterised in that**
several movable sliders (12, 13) are used as gripper frame (6).

6. Method according to one of Claims 1 to 5,
**characterised in that**
a spring-loaded gripper plate (5) projecting from the gripper (4) in the direction of the moulding tool core (2) is used.

7. Device for the production of moulded parts with several adjacent different decorative zones, with
a) a moulding tool (1) with a moulding tool core (2) and a moulding tool mould (3) and
b) a gripper (4) with a gripper plate (5) and a movable gripper frame (6) for the placement of at least one decorative foil (9, 10) in the moulding tool,
wherein
i) the gripper frame (6) for inserting the decorative margins in grooves (7) provided for that purpose in the moulding tool core (2) can be slid in,
ii) the grooves (7) are combined with sliders (8) integrated in the moulding tool core, wherein the sliders (8) can be slid in on the core side to press out the gripper frame (6) and fix the decorative margins in the grooves (7), and
iii) the mould (3) displays ridges (11) provided for the separation of the different decorative zones and which correspond to the sliders (8) integrated in the moulding tool core (2).

8. Device according to Claim 7,
**characterised in that**
several sliders (12, 13) which can move independently of one another are provided as gripper frame (6).

9. Device according to Claim 7 or 8,
**characterised in that**
a spring-loaded plate (5) projecting from the gripper (4) is provided.

## Revendications

1. Procédé d'obtention d'une pièce moulée comportant plusieurs zones décoratives différentes adjacentes à l'aide d'un outil (1) comportant une matrice (3) et un noyau (2) par surmoulage d'au moins une feuille décorative (9, 10) insérée dans l'outil de moulage et recouvrant une zone partielle de la pièce moulée avec un matériau synthétique thermoplastique,
**caractérisé en ce que**
a) la feuille décorative (9, 10) est positionnée sur un élément de préhension (4) comprenant une plaque de préhension (5) et un châssis de préhension mobile,
b) la feuille décorative (9, 10) est insérée à l'aide de l'élément de préhension (4) dans la cavité de l'outil de moulage (1) ouvert,
c) le bord de décoration est introduit à l'aide du châssis de préhension (6) dans des rainures (7) située dans le noyau (2) de l'outil de moulage,
d) la feuille décorative (9, 10) est fixée à l'aide de coulisseaux (8) intégrés dans le noyau (2) et venant en prise dans les rainures (7), ces coulisseaux (8) se déplaçant contre le châssis de préhension (6) venant en prise dans les rainures (7) et le poussant en dehors de ces rainures (7) tandis que simultanément l'élément de préhension (4) comprime la feuille décorative (9, 10) contre le noyau de l'outil de moulage (2) et que le coulisseau (8) serre et maintient la feuille décorative (9, 10) dans les rainures (7),
e) l'élément de préhension (4) est extrait de la cavité de l'outil,
f) l'outil de moulage (1) est fermé par la matrice (3) qui comporte des barrettes (11) correspondant aux rainures (7) ou aux coulisseaux (8) intégrés dans le noyau (2) de l'outil de moulage, et
g) la feuille décorative (9, 10) est ensuite surmoulée côté noyau, en un matériau synthétique thermoplastique (15), avec déplacement vers l'arrière simultané du coulisseau (8), la feuille décorative (9, 10) étant comprimée par le matériau synthétique thermoplastique (15) contre la surface de la matrice, et les différentes zones décoratives étant séparées par les barrettes (11) correspondant aux coulisseaux (8) intégrés dans le noyau (2) de l'outil de moulage.

2. Procédé conforme à la revendication 1,
**caractérisé en ce qu'**
on utilise plusieurs feuilles décoratives (9, 10) différentes insérées dans l'outil de moulage, ces feuilles décoratives étant disposées sur l'élément de préhension (4) en se chevauchant au niveau de leurs zones de bord, et les zones de bord des feuilles décoratives se chevauchant étant introduites à l'aide du châssis de préhension (6) dans les rainures (7) de l'outil de moulage.

3. Procédé conforme à la revendication 1 ou 2,
**caractérisé en ce qu'**
en tant que feuilles décoratives (9, 10) on utilise du tissu, des matière décoratives, des feuilles en matériaux synthétiques, des matériaux de type tapis, du cuir et/ou du cuir synthétique.

4. Procédé conforme à l'une des revendications 1 à 3,
**caractérisé en ce qu'**
en tant que matériau synthétique thermoplastique (15) on utilise du polypropylène (PP), du polyéthylène (PE), du polyuréthane (PU), de l'acrylonitrile-butadiène-styrène (ABS), un copolymère acrylonitrile-butadiène-styrène/polycarbonate (ABS-PC) ou du polyamide (PA).

5. Procédé conforme à l'une des revendications 1 à 4,
**caractérisé en ce qu'**
en tant que châssis de préhension (6) on utilise plusieurs coulisseaux mobiles (12, 13).

6. Procédé conforme à l'une des revendications 1 à 5,
**caractérisé en ce qu'**
on utilise une plaque de préhension élastique (5) faisant saillie en dehors de l'élément de préhension (4) en direction du noyau de l'outil de moulage (2).

7. Dispositif d'obtention de pièces moulées, comportant plusieurs zones décoratives différentes adjacentes comportant :
a) un outil de moulage (1) comportant un noyau d'outil de moulage (2) et une matrice d'outil de moulage (3), et
b) un élément de préhension (4) comportant une plaque de préhension (5) et un châssis de préhension mobile (6) pour insérer au moins une feuille décorative (9, 10) dans l'outil de moulage,
dans lequel,
i. le châssis de préhension (6) est mobile en translation pour introduire les bords de la pièce décorative dans des rainures (7) prévues à cet effet dans le noyau de l'outil de moulage (2),
ii. les rainures (7) sont combinées à des coulisseaux (8) intégrés dans le noyau de l'outil de moulage (2), ces coulisseaux (8) pouvant coulisser dans le noyau pour pousser le châssis de préhension (6) vers l'extérieur et fixer les bords de la pièce décorative dans les rainures (7), et
iii. la matrice (3) est équipée de barrettes (11) correspondant aux coulisseaux (8) intégrés dans le noyau (2) de l'outil de moulage, et prévues pour séparer des zones décoratives différentes.

8. Dispositif conforme à la revendication 7,
**caractérisé en ce qu'**
en tant que châssis de préhension (6) il est prévu plusieurs coulisseaux (12, 13) mobiles indépendamment les uns des autres.

9. Dispositif conforme à la revendication 7 ou à la revendication 8,
**caractérisé en ce qu'**
il est prévu une plaque de préhension élastique (5) faisant saillie en dehors de l'élément de préhension (4).
